# EUROPÄISCHE PATENTSCHRIFT

(11) **EP 2 628 391 B1**
(45) Veröffentlichungstag und Bekanntmachung des Hinweises auf die Patenterteilung: **20.04.2016**
(21) Anmeldenummer: 12155591.6
(22) Anmeldetag: 15.02.2012
(51) Int. Cl.: A22C 11/02

(54) **Verfahren zum Füllen von Würsten mit pastöser Masse sowie Füllmaschine zum Durchführen dieses Verfahrens**
Method for filling sausages with paste mass and filling machine for performing this method
Procédé de remplissage de saucisses avec une masse pâteuse et machine de remplissage destinée à l'exécution de ce procédé

(43) Veröffentlichungstag der Anmeldung: 21.08.2013
(73) Patentinhaber: Albert Handtmann Maschinenfabrik GmbH & Co. KG, 88400 Biberach (DE)
(72) Erfinder: Maile, Bernd, 88422 Oggelshausen (DE)
(74) Vertreter: Grünecker Patent- und Rechtsanwälte PartG mbB

(56) Entgegenhaltungen:
- EP-A1- 0 013 552
- EP-A1- 1 488 702
- EP-A1- 1 997 384
- EP-A2- 1 623 628
- DE-U1-202011 000 207
- US-A- 4 164 057

## Beschreibung

Die Erfindung betrifft ein Verfahren zum Füllen von Würsten mit pastöser Masse mittels Füllmaschine sowie eine Füllmaschine zum Durchführen dieses Verfahrens. Im Bereich der Lebensmitteltechnologie, insbesondere auch bei der Herstellung von Würsten gelten höchste Qualitätsund Hygieneanforderungen. Aus diesem Grund gibt es hohe Wartungsstandards, wobei engmaschige Wartungsintervalle festgelegt werden. Bei Erreichen des Wartungszeitpunktes (z.B. alle 2000 Betriebsstunden) werden dann die zuvor festgelegten Wartungsarbeiten durchgeführt und die vorgesehenen Teile ausgetauscht. Trotz aller Vorsorgemaßnahmen kann es jedoch aus unbekannten Gründen zu Hygieneproblemen oder Schäden und somit Produktionsausfällen und Qualitätsbeeinträchtigungen kommen.

Die EP 1 488 702 A1 beschreibt die Regelung des Herstellungsprozesses bzw. der Herstellungsparameter, wobei ein Druck einer beförderten pastösen Masse vor einer Schneideinrichtung konstant gehalten werden soll. Dabei wird der Druck gemessen. Weiter umfasst die bekannte Vorrichtung auch eine Steuereinrichtung. Diese Anmeldung betrifft jedoch nicht die Wartung in Abhängigkeit von den erfassten Parametern und ermittelt insbesondere nicht, ob eine Maßnahme für ein oder mehrere Verschleißteile nötig ist, indem ein akustisches und/oder optisches Anzeigen erfolgt oder entsprechende Daten gespeichert oder an einen Zentralrechner oder an eine externe optische oder akustische Anzeige weitergeleitet wird.

Die Druckschrift DE 20 2011 000 207 U1 betrifft ein Schneidventil für Lebensmittelfüllgut, jedoch ebenfalls keine Steuereinrichtung, die ermittelt, ob eine Maßnahme an Verschleißteilen notwendig ist.

Hiervon ausgehend liegt der vorliegenden Erfindung die Aufgabe zugrunde, ein Verfahren und eine Füllmaschine bereitzustellen, die eine zuverlässige Produktion von Würsten gewährleisten.

Erfindungsgemäß wird diese Aufgabe durch die unabhängigen Patentansprüche 1 und 7 gelöst.

Im Zusammenhang mit der vorliegenden Erfindung hat man erkannt, dass baugleiche Maschinen und Geräte in der Praxis für unterschiedliche pastöse Massen verwendet werden, so dass die Maschinen sehr unterschiedlich beansprucht werden. Unter unterschiedlichen pastösen Massen versteht man Massen unterschiedlicher Zusammensetzung oder Konsistenz oder Temperatur, aus denen unterschiedliche Prozessbedingungen folgen. Das bedeutet, dass in unterschiedlichen Maschinen Verschleißteile in Abhängigkeit der verwendeten pastösen Masse bzw. unterschiedlicher Prozessbedingungen unterschiedlich schnell verschleißen. Somit kann werkseitig kein fester Zeitpunkt festgelegt werden, wann eine bestimmte Maßnahme an einem Verschleißteil notwendig ist.

Ganz besonders wesentlich ist dabei die einwandfreie Funktion des Förderwerks der Füllmaschine, über das pastöse Masse aus einem Trichter in ein Füllrohr geschoben wird, durch das wiederum die pastöse Masse in Wursthüllen ausgestoßen wird.

Gemäß der vorliegenden Erfindung ist jedoch eine Sensoreinrichtung vorgesehen, die mindestens einen Parameter erfasst, der sich in Abhängigkeit der Zeit für unterschiedliche pastöse Massen unterschiedlich ändert, wobei eine Steuereinrichtung in Abhängigkeit des mindestens einen erfassten Parameters ermittelt, ob eine Maßnahme an bzw. für eines oder mehrere Verschleißteile nötig ist, wobei diese Verschleißteile eben in Abhängigkeit der Art der pastösen Masse unterschiedlich schnell verschleißen. Somit kann ein einwandfreier Betrieb sichergestellt werden, und zwar unabhängig davon, wie die Füllmaschine außerhalb des Werks dann tatsächlich betrieben wird. Schäden an der hergestellten Wurst sowie größere Schäden an der Füllmaschine oder entsprechenden Vorsatzgeräten können somit wirksam verhindert werden. Die Verfügbarkeit der Maschine kann erhöht werden durch rechtzeitiges Erkennen von sich anbahnenden Problemen. Die Lebensdauer der Maschine erhöht sich unter anderem dadurch, dass die Wartung zum erforderlichen Zeitpunkt erfolgt und erforderliche Reparaturen rechtzeitig und zuverlässig erkannt werden.

Die Steuereinrichtung ermittelt dabei vorzugsweise eine Abweichung mindestens eines gemessenen Parameters von einem jeweiligen Sollwert oder Sollwertebereich. Der Sollwert bzw. Sollwertbereich wird werksseitig festgelegt, unabhängig von der später verwendeten pastösen Masse und daraus resultierenden Betriebsparametern.

Gemäß einem bevorzugten Ausführungsbeispiel ist die Steuereinrichtung derart ausgelegt, dass sie aufgrund des mindestens einen ermittelten Parameters einen Zeitpunkt für die notwendige Maßnahme ermittelt. Dazu sind beispielsweise in der Steuereinrichtung für bestimmte Parameterwerte oder Parameterbereiche bestimmte Wartungszeitpunkte oder Zeitfenster und Maßnahmen für bestimmte Verschleißteile abgespeichert, die dann angezeigt werden können.

Gemäß der vorliegenden Erfindung ist eine akustische oder optische Anzeige vorgesehen, die optisch oder akustisch anzeigt, dass eine entsprechende Maßnahme notwendig ist, wenn die Steuereinrichtung entsprechendes bestimmt. Die Daten können aber alternativ oder zusätzlich auch abgespeichert werden oder einem Zentralrechner übermittelt werden oder aber auch an eine externe optische oder akustische Einrichtung weitergeleitet werden. So kann die Information z.B. an einen Kundendienst weitergeleitet werden.

Es ist ganz besonders vorteilhaft, wenn von der Steuereinrichtung bestimmt wird, ob Maßnahmen an Förderwerksteilen, insbesondere an dem Rotor, den Flügeln und/oder mindestens einer Dichtung notwendig sind. Die einwandfreie Funktion des Förderwerks ist sehr wichtig für die spätere Produktqualität der hergestellten Würste, insbesondere für die Gewichtsgenauigkeit und die einwandfreie Produkthygiene.

Ein wichtiger Parameter zum Bestimmen, ob eine Maßnahme an einem Verschleißteil, insbesondere an einem Förderwerk, notwendig ist, ist beispielsweise die Messung des Drucks in und/oder nach dem Förderwerk. Bei Abnutzung bzw. Verschleiß der Flügel oder aber bei Verschleiß der Förderwerksdichtung bzw. -dichtungen kommt es bei zunehmender Betriebszeit zu einer Abnahme des Drucks. Somit dient dieser Parameter dazu, auf einfache Art und Weise festzustellen, wann eine Maßnahme am Förderwerk, wie beispielsweise Austausch der Dichtungen, Nachstellen des Spannexzenters der Flügelzellenpumpe, nötig ist.

Ebenfalls kann das auf den Rotor bzw. die Rotorwelle wirkende Drehmoment als Parameter dienen, dessen Verlauf oder Veränderung während der Betriebszeit überwacht wird. Bei Abnahme des Drehmoments kann dann beispielsweise bestimmt werden, dass eine Maßnahme an der Spannexzentereinstellung nötig ist.

Ferner kann die Strom- und/oder Leistungsaufnahme eines Antriebs, insbesondere des Förderwerkantriebs, als Parameter herangezogen werden. Dabei können beispielsweise die Messwerte über die Zeit integriert werden.

Schließlich kann auch die Temperatur eines Motors, der Umgebung, der pastösen Masse oder von Betriebsstoffen als Parameter herangezogen werden.

Auch eine Schwingungsmessung zum Feststellen einer Unwucht eines Lagers, z.B. des Lagers für die Rotorwelle des Förderwerks ist als Parameter möglich. Ebenfalls können als Parameter die aufintegrierten Messwerte für die Geschwindigkeit eines Antriebs insbesondere des Förderwerkantriebs oder die Anzahl der Umdrehungen des Antriebs bzw. des Förderwerks verwendet werden.

Ein weiterer Parameter kann die Druckdifferenz zwischen zwei Messpunkten im Förderwerk insbesondere zwischen Saug- und Druckbereich sein.

Gemäß einer bevorzugten Ausführungsform wird, wenn ermittelt wird, dass der Zeitpunkt für eine automatische Maßnahme erreicht ist, ein Notprogramm gestartet oder die Maschine gestoppt. Somit können schwerwiegende Folgeschäden bzw. Produktschwankungen verhindert werden.

Die Steuereinrichtung umfasst einen Speicher, in dem für verschiedene Parameter oder Parameterbereiche entsprechende Zeitpunkte oder Zeitfenster für Maßnahmen an einem oder mehreren dazugehörigen Verschleißteilen oder Algorithmen zu deren Berechnung gespeichert sind. Die Zeitpunkte oder Zeitfenster wurden beispielsweise experimentell bestimmt und abgelegt.

Die vorliegende Erfindung wird nachfolgend unter Bezugnahme der folgenden Zeichnungen näher erläutert.
- Fig. 1: zeigt grob schematisch den Aufbau einer Füllmaschine gemäß der vorliegenden Erfindung.
- Fig. 2a: zeigt schematisch den Aufbau eines Förderwerks gemäß der vorliegenden Erfindung.
- Fig. 2b: zeigt schematisch die Abdichtung zwischen dem Gehäuse und einem Antrieb.
- Fig. 3: zeigt einen Ablaufplan des erfindungsgemäßen Verfahrens.
- Fig. 4: zeigt grob schematisch ein Blockschaltbild der Messeinrichtung und Steuereinrichtung und Anzeige gemäß der vorliegenden Erfindung.

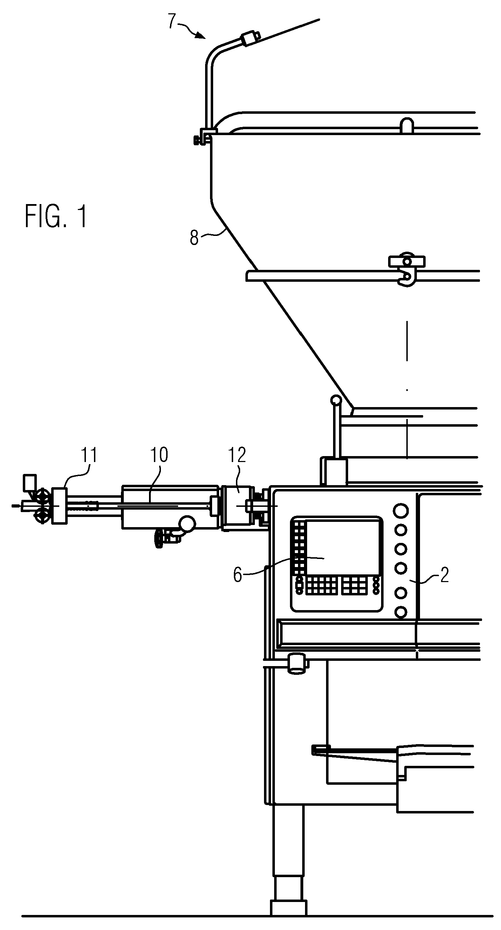

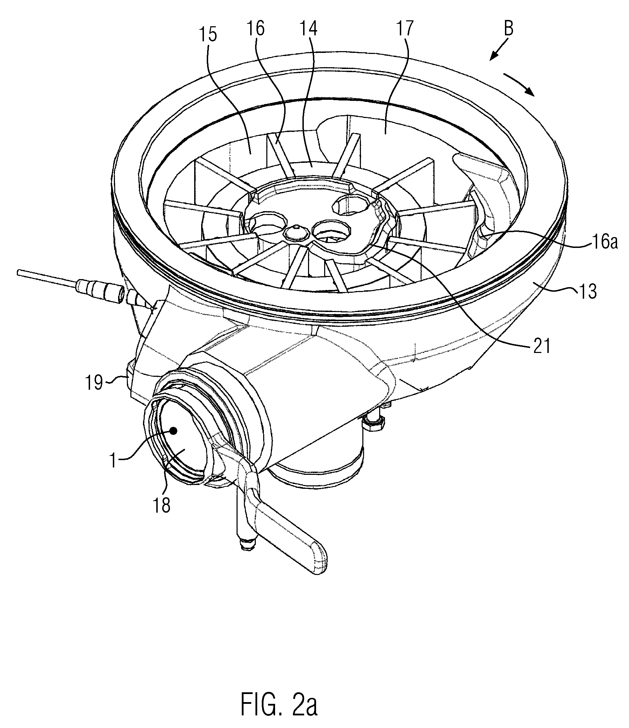

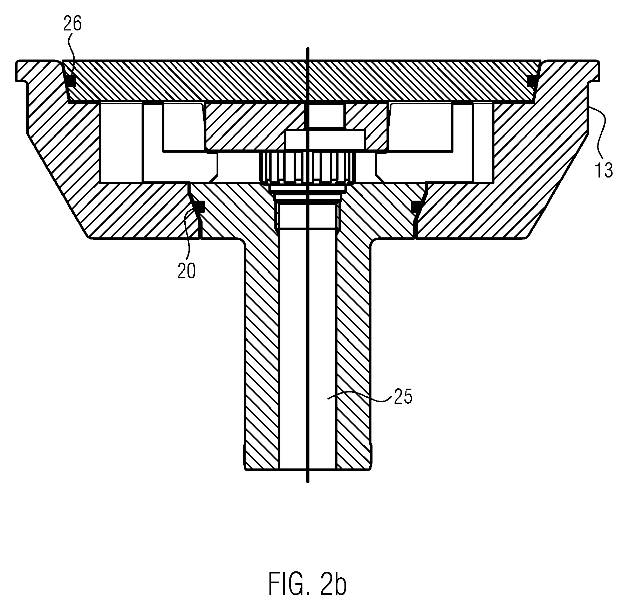

Fig. 1 zeigt eine Füllmaschine zum Herstellen von Würsten gemäß der vorliegenden Erfindung. Die Füllmaschine ist beispielsweise eine Vakuumfüllmaschine. Eine solche Füllmaschine weist beispielsweise ein Gehäuse auf, auf deren Oberseite ein Fülltrichter 8 angeordnet ist, in welchem die pastöse Masse, insbesondere Wurstbrät, eingefüllt ist. Unterhalb des Fülltrichters 8 ist als Dosiervorrichtung eine, beispielsweise in Fig. 2 gezeigte Fördereinrichtung, z.B. eine Flügelzellenpumpe 9 vorgesehen. An dem Auslauf des Förderwerks schließt sich, aus dem Gehäuse herausragend, ein Füllrohr 10 an, über welches pastöse Masse in bekannter Weise in Wursthüllen ausgestoßen wird. Am hinteren Ende des Füllrohrs 10 kann beispielsweise eine Abdrehvorrichtung 11 vorgesehen sein, die einen Antrieb 12 umfasst, der beispielsweise die noch nicht befüllte Wursthülle um ihre Längsachse zusammen mit dem Füllrohr verdreht. Somit kann in bekannter Weise eine Abteilstelle in Form eines Wurstzopfs erzeugt werden. An die Füllmaschine können sich diverse Vorsatzgeräte, wie beispielsweise ein Füllwolf, eine Abdrehlinie, etc. anschließen, die ebenfalls über eine Steuereinrichtung 2 angesteuert werden, die auch die Funktionen der Füllmaschine steuert. Auch das Förderwerk 9 hat einen nicht gezeigten Antrieb, d.h. einen Motor.

Fig. 2 zeigt einen möglichen Aufbau eines Förderwerks, hier die Flügelzellenpumpe, im Detail. Die Flügelzellenpumpe ist beispielsweise in der EP1837524 näher erläutert. Die Flügelzellenpumpe weist ein Gehäuse 13, einen über eine nicht dargestellte Antriebswelle und einen über einen Antriebsmotor antreibbaren Rotor 14 sowie mehrere Flügelzellen 15 auf, die durch sich radial erstreckende Flügel 16 gebildet werden. Die Flügelzellenpumpe weist einen Einlass 17 für pastöse Masse sowie einen Auslass 18 auf. Ferner kann die Flügelzellenpumpe einen Anschluss 19 für eine Vakuumpumpe aufweisen. Die Oberseite der Flügelzellenpumpe ist über die Abdeckscheibe und Dichtung 26 dichtend abgeschlossen. Mit 20 ist beispielsweise eine Dichtung bezeichnet, die den Rotor abdichtet. Wie insbesondere aus Fig. 2b hervorgeht, dichtet die Dichtung 20 zwischen Gehäuse 13 und einer Antriebswelleneinrichtung 25 nach außen ab.

Die zuvor beschriebene Füllmaschine kann in der Praxis für unterschiedliche pastöse Massen verwendet werden, so dass unterschiedliche Maschinen unterschiedlich stark belastet werden. Für unterschiedliche pastöse Massen ergeben sich verschiedene Prozessparameter wie Prozessgeschwindigkeit, Druck im Fülltrichter, Druck im Förderwerk, Temperatur. Auch bei unterschiedlicher Konsistenz der pastösen Massen werden die Maschinenteile unterschiedlich stark belastet. Das bedeutet, dass in unterschiedlichen Maschinen Verschleißteile in Abhängigkeit der verwendeten pastösen Massen unterschiedlich schnell verschleißen.

Ganz besonders wesentlich für die einwandfreie Funktion der Füllmaschine ist die einwandfreie Funktion des Förderwerks. Ganz wesentlich ist hier das Funktionieren der Dichtungen, z.B. der Dichtung 20, um zu verhindern, dass Verunreinigungen in Richtung pastöser Masse treten können und um zu verhindern, dass es zu Druckschwankungen in den einzelnen Flügelzellen kommt, was wiederum zu Gewichtsungenauigkeiten und Qualitätsverlusten führen könnte. Wesentlich ist auch, dass die Flügel 16 an ihren nach außen gewandten Kanten 16a aber auch Ober- und Unterkanten nicht abgenutzt sind, damit beispielsweise in einem Abdichtbereich, der zwischen Einlass 17 und Auslass 18 angeordnet ist, die Flügelzellenkammern abgedichtet werden können. Die Flügelzellenpumpe lässt sich allgemein in mehrere Bereiche einteilen. Einer dieser Bereiche ist der Saugbereich, ein weiterer der Druckbereich bzw. Kompressionsbereich, wobei ein Dichtbereich den Kompressionsbereich vom Saugbereich trennt. Nach Ende des Kompressionsbereichs beginnt der Auslassbereich, in dem die pastöse Masse ausgestoßen wird. Daran schließt sich der Dichtbereich an, welcher den Druckbereich vom Saugbereich trennt. Der Saugbereich beginnt an einer Stelle, an der der spaltartige Abstand zwischen Rotor und Innenwand des Pumpengehäuses zunimmt, derart, dass sich die Flügelzellenkammern vergrößern. Der Saugbereich verläuft bis zum Beginn des Einlasses.

Auch die einwandfreie Funktion des Rotors 14 ist wesentlich für die Funktion der Flügelzellenpumpe.

Gemäß der vorliegenden Erfindung ist daher eine Sensoreinrichtung 1 vorgesehen, die mindestens einen Parameter erfasst, der sich in Abhängigkeit der Zeit für unterschiedliche pastöse Massen unterschiedlich ändert, wobei eine Steuereinrichtung in Abhängigkeit des mindestens einen erfassten Parameters ermittelt, ob eine Maßnahme in einem oder mehreren Verschleißteilen nötig ist, wobei diese Verschleißteile eben auch in Abhängigkeit der Art der pastösen Masse unterschiedlich schnell verschleißen.

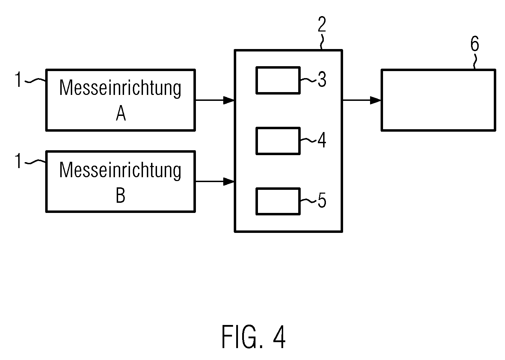

Wie insbesondere auch aus der Fig. 4 zu erkennen ist, kann mindestens eine Messeinrichtung 1 mit der Steuerung 2 verbunden sein, die beispielsweise eine Vergleichseinrichtung 3 aufweist, um eine Abweichung von mindestens einem erfassten Parameter von einem jeweiligen Sollwert oder Sollwertebereich zu ermitteln. Über einen Integrierer 4 ist es auch möglich, Messewerte über die Zeit aufzuintegrieren. Schließlich umfasst die Steuereinrichtung 2 noch einen Speicher 5, in dem Sollwerte oder Sollwertbereiche für verschiedene Parameter oder Parameterbereiche und entsprechende Zeitpunkte oder Zeitfenster für Maßnahmen an einem oder mehreren dazugehörigen Verschleißteilen gespeichert sind, oder aber Algorithmen zur Berechnung gespeichert sind. Wird festgestellt, dass eine Maßnahme nötig sein wird, wird ein Signal an eine akustische und/oder optische Anzeige 6 geleitet, die eine entsprechende Maßnahme oder Maßnahmen für ein oder mehrere Verschleißteile anzeigt und darüber hinaus auch noch eine Voraussage über den Zeitpunkt bzw. ein bestimmtes Zeitfenster machen kann. Ob und wann eine Maßnahme an einem oder mehreren Verschleißteilen nötig ist, kann aber auch zusätzlich oder alternativ abgespeichert und/oder z.B. an einen Zentralrechner und/oder eine externe Anzeige und/oder akustische Einrichtung weitergeleitet werden. Eine externe Anzeige und/oder akustische Einrichtung ermöglicht, dass die Daten an einen Kundendienst weitergeleitet werden können.

In diesem konkreten Ausführungsbeispiel wird die Erfindung anhand des Förderwerks 9 näher erläutert. Zum Beurteilen der einwandfreien Funktion des Förderwerks, hier der Flügelzellenpumpe, ist daher ein Drucksensor 1 in oder in Produktionsrichtung hinter dem Förderwerk angeordnet. Vorzugsweise ist der Drucksensor 1 zwischen dem Einlass 17 für pastöse Masse und dem Auslass 18 innerhalb des Förderwerks angeordnet. Kommt es zu einer Verschlechterung der Dichtwirkung der Dichtungen, z.B. der Dichtung 20, der Flügelzellenpumpe oder aber z.B. zu einem Verschleiß der Flügel 16, fällt der gemessene Druck ab.

Die Steuereinrichtung 2 kann nun eine Abweichung von dem erfassten Parameter, hier dem Druck von einem Sollwert oder Sollwertbereich ermitteln. Wird eine Abweichung erfasst, wird festgestellt, dass eine oder mehrere Maßnahmen zu einem bestimmten Zeitpunkt oder in einem bestimmten Zeitfenster nötig sind, was in der Anzeige 6 angezeigt werden kann. In diesem Fall wird als Maßnahme beispielsweise angegeben, die Dichtungen, insbesondere die Dichtung 20, auszutauschen und den Spannexzenter 21 zu warten. Wie bereits erläutert, weist der Rotor 14 radial verschiebbar gelagerte Flügel 16 auf, die mit der Innenkontur des Pumpengehäuses bzw. der Innenwand, dem Boden des Pumpengehäuses, der Rotorwandung sowie der Abdeckscheibe bzw. dem Deckel des Pumpengehäuses die Flügelzellen 15 bilden. Der Rotor 14 ist um eine Führungseinrichtung, hier dem Spannexzenter 21, angeordnet. Der Spannexzenter 21 ist vorzugsweise exzentrisch im Pumpengehäuse angeordnet. Der Spannexzenter hat die Funktion, die im Rotor 14 radial verschiebbar gelagerten Flügel 16 entsprechend seiner Führungsaußenkontur in Radialrichtung zu führen. Das heißt, dass die Position der Flügel einerseits durch die Innenkontur des Pumpengehäuses und andererseits durch die Führungskontur des Spannexzenters bestimmt wird. Der Spannexzenter ist drehfest angeordnet. Bei einer Abweichung des gemessenen Parameters, beispielsweise des Drucks, wird dann bestimmt, dass die nach außen gewandten Endkanten der Flügel 16 im Druckbereich bzw. Kompressionsbereich in nicht dichtender Weise mit der Gehäuseinnenwand abschließt. Der Kompressionsbereich beginnt in Drehrichtung nach dem Einlass 17 in einem Bereich, in dem sich die Flügelzellekammern verkleinern, d.h. in dem der Radius der Innenkontur des Pumpengehäuses verringert wird und die Flügelzellen durch die Flügel verschlossen sind. Dann muss der Spannexzenter 21 nachgestellt werden. Dabei wird die Außenkontur des Spannexzenters 21 derart nach außen verstellt, dass die Flügelkanten wieder mit der Innenwandung des Gehäuses abdichten können. Dies kann beispielsweise über eine nicht dargestellte Justiereinrichtung z.B. Verstellschrauben erfolgen, wobei der Spannexzenter 21 dann z.B. zwei- oder mehrteilig gestaltet ist, und die Außenkontur durch Positionsveränderung der Spannexzentersegmente zueinander erreicht werden kann. Alternativ oder zusätzlich ist es auch möglich, dass der Spannexzenter derart gelagert ist, dass seine Position in Radialrichtung, d.h. in eine Richtung zum Pumpengehäuse hin, verstellbar ist, um so eine entsprechende Führungskontur nachzustellen. Dazu kann der Spannexzenter beispielsweise in einem sich nach außen in Richtung Pumpengehäuse erstreckenden Langloch verstellbar gelagert sein. Durch Verschieben und Fixieren des Spannexzenters im Langloch kann dann eine bestimmte Position und somit eine bestimmte Lage der Führungskontur eingestellt werden.

Bei der Wartung des Spannexzenters wird also der Spannexzenter 21 nachgestellt. Somit kann hier auf einfache Art und Weise durch Messung des Drucks ermittelt werden, wann die entsprechenden Maßnahmen notwendig sind. Es gibt hier kein festes Wartungsintervall, sondern die Füllmaschine wird, wenn sie für unterschiedliche pastöse Massen verwendet wird, genau dann gewartet, wenn die Sensoreinrichtung feststellt, dass kein einwandfreier Betrieb mehr gewährleistet werden kann. Der Sollwertbereich für den Druck im Druckbereich, bzw. die Druckdifferenz zwischen Saug- und Druckbereich an zwei Messstellen liegt z.B. zwischen 10 und 15 bar und wird unabhängig von der späteren Betriebsart werksseitig festgelegt. Die Druckmessung ist hier sehr einfach und vorteilhaft. Als Drucksensoren sind geeignet: elektronische Druckaufnehmer, Differenzdrucksensoren, etc.

Alternativ oder zusätzlich kann auch eine Einrichtung zum Erfassen des auf den Rotor 14 bzw. dessen Antriebswelle wirkenden Drehmoments vorgesehen sein. Dazu kann beispielsweise die Torsion der Antriebswelle, z. B. mittels Dehnmessstreifen gemessen werden. Mit zunehmender Betriebszeit kann sich das Drehmoment ändern, was auf einen Verschleiß der Pumpenflügel rückschließen lässt und was folgende Maßnahme nötig macht: Nachstellen des Spannexzenters.

Es ist auch möglich, eine Einrichtung zum Erfassen der Strom- und/oder Leistungsaufnahme eines Antriebs, insbesondere des Förderwerkantriebs, vorzusehen. Zum Erfassen des Parameters können die Messwerte für die Strom- und/oder Leistungsaufnahme dabei über die Betriebszeit aufintegriert werden. Bei einer bestimmten Strom- und/oder Leistungsaufnahme wird von der Steuereinrichtung 2 bestimmt, dass z.B. folgende Maßnahmen notwendig sind: Austausch der Antriebswellenlagerung. Dazu kann beispielsweise die Leistungsregelung des Antriebsmotors verwendet werden.

Ebenso kann eine Einrichtung zum Erfassen der Temperatur der pastösen Masse und/oder des Motors, hier beispielsweise des Förderwerkantriebs und/oder von Betriebsstoffen, wie z.B. Getriebeöl, Vakuumpumpenöl, etc. vorgesehen sein. Weist beispielsweise die pastöse Masse oder der Motor eine zu hohe Temperatur auf, so kann es auch zur Schädigung der pastösen Masse kommen. Die zu hohe Temperatur kann in Folge eines erhöhten Lagerspiels entstehen. Es droht ein Ausfall des Lagers. Folgende Maßnahme sollte dann eingeleitet werden: Einstellen des Lagerspiels oder Austausch der Lagerung. Somit kann ein Qualitätsverlust der hergestellten Würste und auch größere Folgeschäden vermieden werden. Der Sollwertbereich für die Temperatur der pastösen Masse liegt z.B. in einem Bereich von -6° bis +70°C.

Ebenfalls ist es möglich, eine Einrichtung zur Schwingungsmessung vorzusehen zum Feststellen einer Unwucht eines Lagers oder eines Lagerschadens, beispielsweise des Lagers für die Antriebswelle des Förderwerks. Die Einrichtung zur Schwingungsmessung kann dabei z.B. ein Beschleunigungssensor auf drei Bewegungsebenen im Maschineninnenraum im Bereich der Lagerung angeordnet sein. Der Vergleichsparameter ist der gemessene Schwingungswert einer neuen Lagerung, wobei der Sollwertbereich ein im Maschinenspeicher abgelegter Erfahrungswert aus Maschinen mit geringer Laufleistung darstellt.. Bei Feststellen einer Parameterabweichung d.h. einer Unwucht, wird das Zeitfenster bzw. der Zeitpunkt für den Austausch des Lagers angezeigt.

Darüber hinaus ist es auch möglich, eine Einrichtung vorzusehen, die als Parameter die aufintegrierten Messwerte für die Geschwindigkeit des Förderwerks liefern, wobei die Geschwindigkeit erfasst wird durch den Resolver bzw. Drehgeber am Antriebsmotor oder durch Positionssensoren am Förderwerk, die z. B. die Flügel abtasten. Schließlich kann auch eine Einrichtung zum Erfassen der Anzahl der Umdrehungen des Antriebs, hier des Förderwerks, vorgesehen sein. Auch mit Hilfe dieser Parameter kann ermittelt werden, dass eine Wartung der Dichtungen oder der Flügelzellen notwendig ist.

Bei Messwerten, die über die Betriebszeit aufintegriert werden, bleiben die entsprechenden Werte, auch bei Stillstand der Füllmaschine, in einem Speicher der Steuereinrichtung gespeichert.

Bei der oben beschriebenen Ausführungsform wurden die Messeinrichtungen innerhalb der Füllmaschine für das Förderwerk beschrieben.

Über die Steuereinrichtung 2 werden auch mehrere Vorsatzgeräte angesteuert, so dass über die zuvor beschriebenen Parameter von der Steuereinrichtung 2 auch Rückschlüsse über die Wartung von Verschleißteilen der Vorsatzgeräte, wie beispielsweise Füllwolf, Abdrehlinie, etc. gezogen werden können und entsprechende Maßnahmen an den jeweiligen Verschleißteilen mit entsprechender Zeitangabe wie zuvor beschrieben angezeigt werden können.

Beispielsweise kann auch eine Drehmomentmessung für die Abdreheinrichtung 11, 12 sowie eine Messung der Strom- und/oder Leistungsaufnahme des Antriebs für die Abdreheinrichtung 11, 12 und eine Schwingungsmessung für die Abdreheinrichtung 11, 12 vorgenommen werden, damit über die Steuereinrichtung 2 entschieden werden kann, dass bei einer Abweichung von einem Sollwert oder Sollwertbereich Maßnahmen an der Abdreheinrichtung, wie zuvor im Zusammenhang mit dem Förderwerk beschrieben wurde, vorgenommen werden müssen. Entsprechendes kann auch für folgende Antriebe: Hebevorrichtung, Zusatzantrieb, Vakuumpumpe, etc. durchgeführt werden.

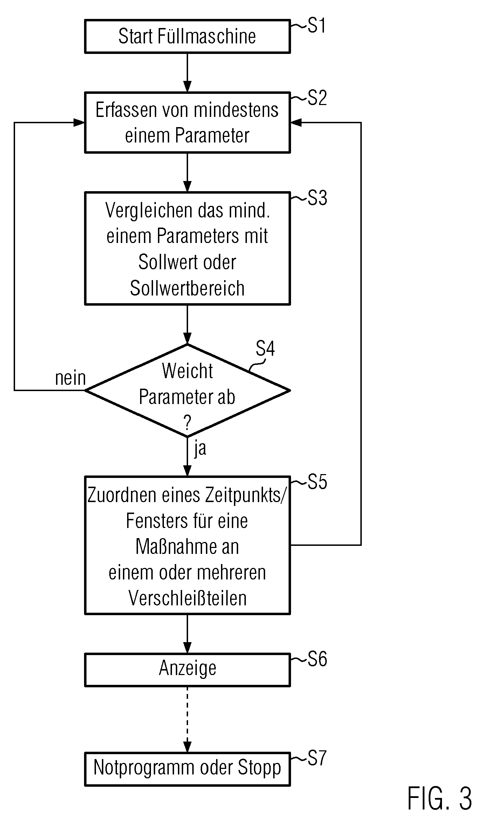

Nachfolgend wird das erfindungsgemäße Verfahren im Zusammenhang mit Fig. 3 näher erläutert.

Im Schritt S1 wird der Betrieb der Füllmaschine gestartet. Über mindestens eine Sensoreinrichtung 1 wird mindestens ein Parameter kontinuierlich während des Betriebs erfasst (S2). Die Parameter werden in einer Steuereinrichtung 2 beispielsweise mit einem Sollwert oder Sollwertbereich verglichen.

Im Schritt S4 wird für jeden der gemessenen Parameter bestimmt, ob er vom Sollwert oder Sollwertbereich abweicht. Wird bestimmt, dass es keine Abweichung gibt, so wird der entsprechende Parameter weiter überwacht. Es erfolgt keine Anzeige oder eine Anzeige, dass keine Maßnahme nötig ist.

Wird jedoch bestimmt, dass der Parameter abweicht, so kann in einem Schritt S5 ein Zeitpunkt oder ein Zeitfenster für eine bestimmte Maßnahme an einem oder mehreren Verschleißteilen zugeordnet werden. Ist beispielsweise der in einer Förderzelle gemessene Druck zu weit abgefallen, so wird beispielsweise bestimmt, wann oder in welchem Zeitraum Maßnahmen, wie z.B. Austausch der Dichtungen (z.B. Dichtung 20) oder Wartung der Flügelzellen, Nachstellen des Spannexzenters, notwendig ist. Dabei ist beispielsweise in der Steuerung für verschiedene Parameter oder Parameterbereiche ein entsprechender Zeitpunkt oder ein entsprechendes Zeitfenster für die Maßnahmen an einem oder mehreren dazugehörigen Verschleißteilen gespeichert oder aber es sind Algorithmen zur Berechnung gespeichert.

Die Steuereinrichtung 2 sendet dann entsprechende Signale an eine Anzeige, die in einem Schritt S6 die Maßnahmen, die erforderlich sind und den Zeitpunkt und/oder das Zeitfenster anzeigt. Führt der Bediener die entsprechende Wartung durch, so stellt sich bei einem weiteren Betrieb ein Parameter (oder mehrere Parameter) im Sollbereich ein.

Wird jedoch in dem bestimmten Zeitfenster keine Wartung vorgenommen, so kann entsprechend Schritt S7 entweder ein Notprogramm eingeleitet werden oder aber die Maschine automatisch stoppen, um weitere Schäden zu verhindern. Beim Notprogramm können die Betriebszustände auf ein unkritisches Maß angepasst werden (z.B. Förderwerksgeschwindigkeit).

Es ist auch möglich, dass vor Schritt S5 mehrere Messparameter bzw. deren Abweichung miteinander logisch verknüpft werden. Das heißt, dass beispielsweise nur dann entsprechend Schritt S5 für eine Maßnahme an einem oder mehreren Verschleißteilen ein Zeitpunkt oder Zeitfenster zugeordnet wird, wenn vorbestimmte, z.B. mindestens zwei, Parameter abweichen.

## Patentansprüche

1. Verfahren zum Füllen von Würsten mit pastöser Masse mittels Füllmaschine (7), wobei
über eine Sensoreinrichtung (1) mindestens ein Parameter erfasst wird, der sich in Abhängigkeit der Zeit für unterschiedliche pastöse Massen unterschiedlich ändert,
eine Steuereinrichtung (2) in Abhängigkeit des mindestens einen erfassten Parameters ermittelt, ob eine Maßnahme für ein oder mehrere Verschleißteilen (8), die bei unterschiedlichen pastösen Massen unterschiedlich schnell verschleißen, nötig ist und wenn
die Steuereinrichtung ermittelt hat, dass eine Maßnahme nötig sein wird, eine akustische und/oder optische Anzeige erfolgt oder entsprechende Daten gespeichert oder z. B. an einen Zentralrechner oder an eine externe optische oder akustische Anzeige weitergeleitet werden.

2. Verfahren nach Anspruch 1, **dadurch gekennzeichnet, dass** die Steuereinrichtung (2) eine Abweichung von mindestens einem erfassten Parameter von einem jeweiligen Sollwert oder Sollwertbereich ermittelt.

3. Verfahren nach mindestens einem der Ansprüche 1 oder 2, **dadurch gekennzeichnet, dass** die Steuereinrichtung (2) einen Zeitpunkt oder ein Zeitfenster für die nötige Maßnahme ermittelt.

4. Verfahren nach mindestens einem der Ansprüche 1 bis 3, **dadurch gekennzeichnet, dass** von der Steuereinrichtung (2) bestimmt wird, ob Maßnahmen an Förderwerksteilen der Füllmaschine (7), insbesondere deren Rotor (14) und/oder Flügel (16) und/oder mindestens einer Dichtung (20) notwendig sind.

5. Verfahren nach mindestens einem der Ansprüche 1 bis 4, **dadurch gekennzeichnet, dass** von der Steuereinrichtung (2) bestimmt wird, ob Maßnahmen an Maschinenkomponenten, insbesondere einer Vakuumpumpe oder einem Vorsatzgerät, notwendig sind.

6. Verfahren nach mindestens einem der Ansprüche 1 bis 5, **dadurch gekennzeichnet, dass** als Parameter erfasst wird: der Druck in und/oder nach dem Förderwerk (9) - und/oder das Drehmoment am Rotor (14) - und/oder die Strom- und/oder Leistungsaufnahme eines Antriebs, insbesondere des Förderwerkantriebs - und/oder die Temperatur eines Motors, der pastösen Masse oder von Betriebsstoffen - und/oder Schwingungen zum Feststellen einer Unwucht und/oder aufintegrierte Messwerte der Antriebsgeschwindigkeit, insbesondere der Förderwerksgeschwindigkeit - und/oder Anzahl der Umdrehungen des Antriebs und/oder Druckdifferenz zwischen Saug- und Druckbereich des Förderwerks oder der Vakuumpumpe.

7. Füllmaschine (7) insbesondere zum Durchführen des Verfahrens nach mindestens einem der Ansprüche 1 bis 6 mit
einer Sensoreinrichtung (1), mit der mindestens ein Parameter erfasst werden kann, der sich in Abhängigkeit der Zeit für unterschiedliche pastöse Massen unterschiedlich ändert, sowie
einer Steuereinrichtung (2), die in Abhängigkeit des mindestens einen gemessenen Parameters ermittelt, ob eine Maßnahme für ein oder mehrere Verschleißteile (9), die in Abhängigkeit der Art der pastösen Masse unterschiedlich schnell verschleißen, nötig ist, **dadurch gekennzeichnet, dass**
die Füllmaschine (7) eine optische Anzeige (6) und/oder eine akustische Einrichtung aufweist, die anzeigt und/oder speichert und/oder an einen Zentralrechner und/oder an eine externe Anzeige und/oder akustische Einrichtung weiterleitet, ob und wann eine Maßnahme an einem oder mehreren Verschleißteilen nötig ist.

8. Füllmaschine (7) nach Anspruch 7, **dadurch gekennzeichnet, dass** das Verschleißteil ein Förderwerksteil (9) ist, insbesondere ein Rotor (14) und/oder Flügel (16) und/oder eine Dichtung oder Dichtung(en) (20).

9. Füllmaschine (7) nach mindestens einem der Ansprüche 7 bis 8, **dadurch gekennzeichnet, dass** die Sensoreinrichtung (1) folgende Einrichtung(en) umfasst:
Messeinrichtung zum Messen des Drucks in und/oder nach dem Förderwerk (9), und/oder Einrichtung zum Erfassen des auf den Rotor wirkenden Drehmoments, und/oder Einrichtung zum Erfassen der Strom- und/oder Leistungsaufnahme eines Antriebs und/oder
Einrichtung zum Erfassen der Temperatur der pastösen Masse und/oder des Motors und/oder von Betriebsstoffen und/oder
Einrichtung zur Schwingungsmessung zum Feststellen einer Unwucht eines Lagers und/oder
Einrichtung zum Erfassen aufintegrierter Messwerte der Antriebsgeschwindigkeit - insbesondere Förderwerksgeschwindigkeit und/oder
Einrichtung zum Erfassen der Anzahl der Umdrehungen des Antriebs und/oder
Einrichtung zum Erfassen der Druckdifferenz zwischen Saug- und Druckbereich des Förderwerks oder der Vakuumpumpe.

10. Füllmaschine (7) nach mindestens einem der vorherigen Ansprüche, **dadurch gekennzeichnet, dass** die Steuereinrichtung (2) einen Speicher (5) umfasst, in dem für verschiedene Parameter oder Parameterbereiche entsprechende Vergleichswerte und entsprechende Zeitpunkte oder Zeitfenster für Maßnahmen an einem oder mehreren dazugehörigen Verschleißteilen gespeichert sind, und / oder Algorithmen zur Berechnung gespeichert sind.

11. Verfahren nach mindestens einem der Ansprüche 1 bis 7, **dadurch gekennzeichnet, dass**, wenn ermittelt wird, dass der Zeitpunkt für eine Maßnahme erreicht ist, ein Notprogramm gestartet wird oder die Maschine gestoppt wird.

## Claims

1. Method for filling sausages with a paste-like substance by means of a filling machine (7),
wherein
a sensor unit (1) determines at least one parameter that varies differently for different paste-like substances as a function of time, and,
depending on the at least one determined parameter, a controller (2) determines whether a measure for one or more wearing parts (8) is necessary, the wearing parts wearing out at different times depending on the different paste-like substances, and if the controller has determined that a measure will be necessary, an acoustic and/or a visual indication takes place, or corresponding data are stored or passed on, for instance, to a central computer or to an external visual or acoustic indicator

2. Method according to claim 1, **characterized in that** the controller (2) detects a deviation of at least one determined parameter from a respective set value or set value range.

3. Method according to at least one of claims 1 or 2, **characterized in that** the controller (2) determines a point in time or a time window for the required measure.

4. Method according to at least one of claims 1 to 3, **characterized in that** it is determined by the controller (2) whether measures to be implemented on conveyor components of the filling machine (7) are necessary, in particular on the rotor (14) and/or the blades (16) and/or at least one sealing (20).

5. Method according to at least one of claims 1 to 4, **characterized in that** it is determined by the controller (2) whether measures to be implemented on machine components are necessary, in particular on a vacuum pump or an attachment.

6. Method according to at least one of claims 1 to 5, **characterized in that** the determined parameter is: the pressure in and/or downstream of the conveyor (9) - and/or the torque at the rotor (14) - and/or the current consumption and/or power consumption of a drive, in particular of the conveyor drive - and/or the temperature of a motor, the paste-like substance or of operating supplies - and/or vibrations to detect an imbalance and/or integrated measurement values of the drive speed, in particular of the conveyor speed - and/or the number of revolutions of the drive and/or the pressure difference between the suction area and pressure area of the conveyor or the vacuum pump.

7. Filling machine (7), in particular for performing the method according to at least one of claims 1 to 6, comprising:
a sensor unit (1) capable of determining at least one parameter that varies differently for different paste-like substances as a function of time, and,
a controller (2) which, depending on the at least one measured parameter, determines whether a measure for one or more wearing parts (9) is necessary, the wearing parts wearing out at different times depending on the type of the paste-like substance, **characterized in that** the filling machine (7) comprises a visual display (6) and/or an acoustic device which indicates and/or stores and/or passes on to a central computer and/or to an external indicator and/or to an acoustic device whether and when a measure to be implemented on one or more wearing parts is necessary.

8. Filling machine (7) according to claim 7, **characterized in that** the wearing part is a conveyor component (9), in particular a rotor (14) and/or a blade (16) and/or a sealing or sealings (20).

9. Filling machine (7) according to at least one of claims 7 to 8, **characterized in that** the sensor unit (1) comprises the following device(s):
a measuring device for measuring the pressure in and/or downstream of the conveyor (9), and/or
a device for determining the torque acting on the rotor, and/or
a device for determining the current consumption and/or power consumption of a drive, and/or
a device for determining the temperature of the paste-like substance and/or of the motor and/or of operating supplies, and/or
a vibration measuring device for detecting an imbalance of a bearing, and/or
a device for determining integrated measurement values of the drive speed - in particular of the conveyor speed, and/or
a device for determining the number of revolutions of the drive, and/or
a device for determining the pressure difference between the suction area and the pressure area of the conveyor or the vacuum pump.

10. Filling machine (7) according to at least one of the preceding claims, **characterized in that** the controller (2) comprises a memory (5) in which for different parameters and parameter ranges corresponding comparative values and corresponding points in time or time windows for measures to be implemented on one or more associated wearing parts and/or algorithms for the calculation are stored.

11. Method according to at least one of claims 1 to 7, **characterized in that**, if it is determined that the point in time for an automatic measure is reached, an emergency program is started or the machine is stopped.

## Revendications

1. Procédé de remplissage de saucisses avec une masse pâteuse, au moyen d'une machine de remplissage (7), d'après lequel
on relève, par l'intermédiaire d'un dispositif de capteur (1), au moins un paramètre qui varie de manière différente en fonction du temps pour différentes masses pâteuses,
un dispositif de commande (2) détermine, en fonction dudit au moins un paramètre relevé, si une mesure d'intervention est nécessaire pour une ou plusieurs pièces d'usure (8), qui s'usent plus ou moins rapidement pour des masses pâteuses différentes, et lorsque
le dispositif de commande a déterminé la nécessité d'une mesure d'intervention, il apparaît une indication acoustique et/ou optique, ou des données correspondantes sont mémorisées ou transmises par exemple à un calculateur central ou à une visualisation externe optique ou acoustique.

2. Procédé selon la revendication 1, **caractérisé en ce que** le dispositif de commande (2) détermine un écart dudit au moins un paramètre relevé par rapport à une valeur de consigne ou une plage de valeurs de consigne correspondante.

3. Procédé selon l'une au moins des revendications 1 ou 2, **caractérisé en ce que** le dispositif de commande (2) détermine le moment ou une fenêtre de temps pour la mesure d'intervention nécessaire.

4. Procédé selon l'une au moins des revendications 1 à 3, **caractérisé en ce que** le dispositif de commande (2) détermine si des mesures d'intervention sont nécessaires sur des pièces du groupe de transport de la machine de remplissage (7), notamment son rotor (14) et/ou ses ailettes (16) et/ou au moins un joint d'étanchéité (20).

5. Procédé selon l'une au moins des revendications 1 à 4, **caractérisé en ce que** le dispositif de commande (2) détermine si des mesures d'intervention sont nécessaires sur des composants de machine, notamment une pompe à vide ou un appareillage d'adaptation.

6. Procédé selon l'une au moins des revendications 1 à 5, **caractérisé en ce que** l'on relève comme paramètre : la pression dans et/ou après le groupe de transport (9), et/ou le couple au niveau du rotor (14), et/ou le courant, et/ou la puissance absorbée d'un entraînement, notamment de l'entraînement du groupe de transport, et/ou la température d'un moteur, de la masse pâteuse ou de substances de service, et/ou des oscillations ou vibrations pour déceler un balourd, et/ou des valeurs de mesure intégrées de la vitesse d'entraînement, notamment de la vitesse de transport, et/ou le nombre de tours de rotation de l'entraînement, et/ou la différence de pression entre la zone d'aspiration et la zone de refoulement du groupe de transport ou de la pompe à vide.

7. Machine de remplissage (7) notamment destinée à la mise en oeuvre du procédé selon l'une au moins des revendications 1 à 6, comprenant
un dispositif de capteur (1), à l'aide duquel il est possible de relever au moins un paramètre qui varie de manière différente en fonction du temps pour différentes masses pâteuses,
ainsi qu'un dispositif de commande (2), qui détermine en fonction dudit au moins un paramètre mesuré, si une mesure d'intervention est nécessaire pour une ou plusieurs pièces d'usure (9), qui s'usent plus ou moins rapidement pour des masses pâteuses différentes,
**caractérisée en ce que**
la machine de remplissage (7) comporte un système de visualisation optique (6) et/ou un dispositif acoustique, qui indique et/ou mémorise et/ou transmet à un calculateur central et/ou à une visualisation externe et/ou à un dispositif acoustique externe, si et quand une mesure d'intervention est nécessaire sur une ou plusieurs pièces d'usure.

8. Machine de remplissage (7) selon la revendication 7, **caractérisée en ce que** la pièce d'usure est une pièce du groupe de transport (9), notamment un rotor (14) et/ou des ailettes (16) et/ou un joint ou des joints d'étanchéité (20).

9. Machine de remplissage (7) selon l'une au moins des revendications 7 à 8, **caractérisée en ce que** le dispositif de capteur (1) comprend les dispositifs suivants :
un dispositif de mesure pour mesurer la pression dans et/ou après le groupe de transport (9), et/ou un dispositif pour relever le couple agissant sur le rotor, et/ou
un dispositif pour relever le courant ou la puissance absorbée d'un entraînement, et/ou
un dispositif pour relever la température de la masse pâteuse et/ou du moteur et/ou de substances de service, et/ou
un dispositif de mesure d'oscillations ou vibrations pour déceler un balourd d'un palier, et/ou un dispositif pour relever des valeurs de mesure intégrées de la vitesse d'entraînement, notamment une vitesse de transport, et/ou
un dispositif pour relever le nombre de tours de rotation de l'entraînement, et/ou
un dispositif pour relever la différence de pression entre la zone d'aspiration et de refoulement du groupe de transport ou de la pompe à vide.

10. Machine de remplissage (7) selon l'une au moins des revendications précédentes, **caractérisée en ce que** le dispositif de commande (2) comprend un système de mémoire (5) dans lequel sont mémorisés, pour différents paramètres ou différentes plages de paramètres, des valeurs de comparaison correspondantes et des moments correspondants ou fenêtres de temps correspondantes pour des mesures d'intervention sur une ou plusieurs pièces d'usure associées, et/ou sont mémorisés des algorithmes pour le calcul.

11. Procédé selon l'une au moins des revendications 1 à 7, **caractérisé en ce que** lorsqu'il a été déterminé que le moment pour une mesure d'intervention était atteint, on démarre un programme d'urgence ou on stoppe la machine.
